Europäisches Patentamt

European Patent Office

Office européen des brevets

(19)

(11) **EP 1 361 468 A2**

(12) **EUROPÄISCHE PATENTANMELDUNG**

(43) Veröffentlichungstag:
**12.11.2003 Patentblatt 2003/46**

(51) Int Cl.⁷: **G02B 21/00**

(21) Anmeldenummer: **03100966.5**

(22) Anmeldetag: **10.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **18.04.2002 DE 10217404**

(71) Anmelder: **Leica Microsystems Wetzlar GmbH 35578 Wetzlar (DE)**

(72) Erfinder: **Hamborg, Martin 35606, Solms (DE)**

(74) Vertreter: **Reichert, Werner F., Dr. Leica Microsystems AG, Corporate Patents + Trademarks Department, Ernst-Leitz-Strasse 17-37 35578 Wetzlar (DE)**

(54) **Autofokusverfahren für ein Mikroskop und System zum Einstellen des Fokus für ein Mikroskop**

(57) Es ist ein Autofokusverfahren für ein Mikroskop (2) und ein System zum Einstellen eines Fokus für das Mikroskop (2) offenbart. Das Mikroskop (2) besitzt einen Mikroskoptisch (18) und einen in einer Arbeitsposition befindliches Objektiv (16). Zwischen dem Mikroskoptisch (18) und dem Objektiv findet eine Relativbewegung in z-Richtung statt. Während der Relativbewegung werden von der Kamera (20) Bilder eingelesen und für die Auswertung und Bestimmung der Fokuslage ist eine Mikroskopkontrolleinrichtung (4) und ein Computer (6) vorgesehen.

Fig. 1

EP 1 361 468 A2

**Beschreibung**

Die Erfindung betrifft ein Autofokusverfahren für ein Mikroskop.

Ferner betrifft die Erfindung ein System zum Einstellen des Fokus für ein Mikroskop. Im besonderen betrifft das System ein Mikroskop mit einem in einer Arbeitsposition angeordneten Objektiv und einem Mikroskoptisch, wobei zwischen dem Objektiv und dem Mikroskoptisch eine Relativbewegung in z-Richtung erzeugbar ist, einer Kamera, die mit dem Mikroskop verbunden ist, um Bilder eines Objekts aufzunehmen, einer Mikroskopkontrolleinrichtung und einem Computer, der über mindesten eine Verbindung mit der Mikroskopkontrolleinrichtung verbunden ist.

In der Europäischen Patentanmeldung EP-A-0 124 241 ist ein Mikroskop mit einer automatischen Fokuseinrichtung offenbart. Das Mikroskop umfasst eine Speichereinrichtung zum Sichern der Daten von den Objektiven, die im Mikroskop Verwendung finden. Ebenso ist eine Kontrolleinrichtung vorgesehen, die die verschiedenen Mikroskopfunktionen überwacht und steuert. Zu den Aufgaben der Kontrolleinrichtung zählt ebenfalls die Bewegung des Mikroskoptisches (auch: Fokussiertisch). Ein CCD-Element ist als Bildaufnahmeeinrichtung vorgesehen, das ein von dem jeweils ausgewählten Objektiv ein Bild empfängt und zusammen mit einer Recheneinheit aus dem Kontrast die optimale Fokuslage bestimmt. Bei der Ermittlung des optimalen Schärfegrades müssen die Objektivdaten des aktuell verwendeten Objektivs berücksichtigt werden. Das hier offenbarte System ist nicht dazu ausgebildet, die Kontrastwerte bei einem kontinuierlich in z-Richtung bewegten Mikroskoptisch zu ermitteln.

Problematisch bei der automatischen Fokuseinstellung bei Mikroskopen ist, dass die Zeit für die Erreichung der optimalen Fokuslage zu lange ist.

Die Aufgabe der vorliegenden Erfindung besteht entsprechend darin, ein Autofokusverfahren für ein Mikroskop zu schaffen, das automatisch, schnell und zuverlässig auf eine mikroskopisches Objekt fokussiert.

Die Aufgabe wird gelöst durch ein Verfahren, das die Merkmale des Anspruchs 1 umfasst.

Eine weitere Aufgabe der Erfindung besteht entsprechend darin, ein System zum Einstellen des Fokus für ein Mikroskop zu schaffen, das automatisch, schnell und zuverlässig auf eine mikroskopisches Objekt fokussiert.

Die Aufgabe wird gelöst durch ein System, das die Merkmale des Anspruchs 7 umfasst.

Es ist von besonderen Vorteil, dass für die Bestimmung des Fokus die Relativbewegung zwischen dem Mikroskoptisch und einem in der Arbeitsposition befindlichen Objektiv ohne Unterbrechung weiterlaufen kann. Dies führt neben anderen Vorteilen zu einer erheblich schnellen Bestimmung der optimalen Fokuslage. Die Verwendung einer Videokamera ist von Vorteil, da mit dieser Kamera eine kostengünstige und schnelle Bildaufnahme möglich ist. Ebenso ist es denkbar, dass eine Digitalkamera für die Aufnahme der Bilder des Objekts verwendet wird.

Das System zum Einstellen des Fokus für ein Mikroskop mit einem in einer Arbeitsposition angeordneten Objektiv und einem Mikroskoptisch ist derart ausgebildet, dass zwischen dem Objektiv und dem Mikroskoptisch eine Relativbewegung in z-Richtung erzeugbar ist. Ferner ist eine Kamera vorgesehen, die in Form einer Videokamera ausgebildet sein kann. Die Kamera ist über den Phototubus mit dem Mikroskop verbunden, um somit die Bilder des Objekts aufzunehmen. Ferner ist eine Mikroskopkontrolleinrichtung und ein Computer vorgesehen, die über mindestens eine Verbindung miteinander verbunden sind. Der Computer umfasst ein Mittel zum Erzeugen eines Triggersignals, wobei das Triggersignal nach Abschluss eines jeden Bildeinzuges von der Kamera die Bestimmung der momentanen z-Position der kontinuierlichen Relativbewegung auslöst. Diese so bestimmte z-Position wird in einem Speicher in der Mikroskopkontrolleinrichtung abgelegt. Zur Bestimmung der optimalen Fokuslage werden die Werte der z-Position aus dem Speicher abgerufen.

Weitere Vorteile und vorteilhafte Ausführungsformen sind Gegenstand der nachfolgenden Figurenbeschreibung. Es zeigen im Einzelnen:

Fig. 1: eine schematische Darstellung des Systems zum Einstellen des Fokus für ein Mikroskop;

Fig. 2 eine schematische Darstellung des Verfahrens zur Bestimmung der z-Position mit der optimalen Fokuslage;

Fig. 3: eine Darstellung des Zusammenwirkens des Computers mit der Mikroskopkontrolleinrichtung zur Bestimmung der optimalen Fokuslage;

Fig. 4: eine graphische Darstellung eines Roberts-Cross-Operators;

Fig. 5: eine graphische Darstellung eines Pseudo-Operators zur Bestimmung des Gradientenwerts;

Fig. 6 die Ergebnisse der mit dem Pseudo-Operator aus Fig. 5 durchgeführten Bildtransformation an Hand eines realen Bildes;

Fig. 7 eine graphische Darstellung der Kontrastwerte in Abhängigkeit von der z-Position; und

Fig. 8      eine graphische Darstellung der Ermittlung der z-Position mit dem optimalen Fokus an Hand eines Interpolationsverfahrens.

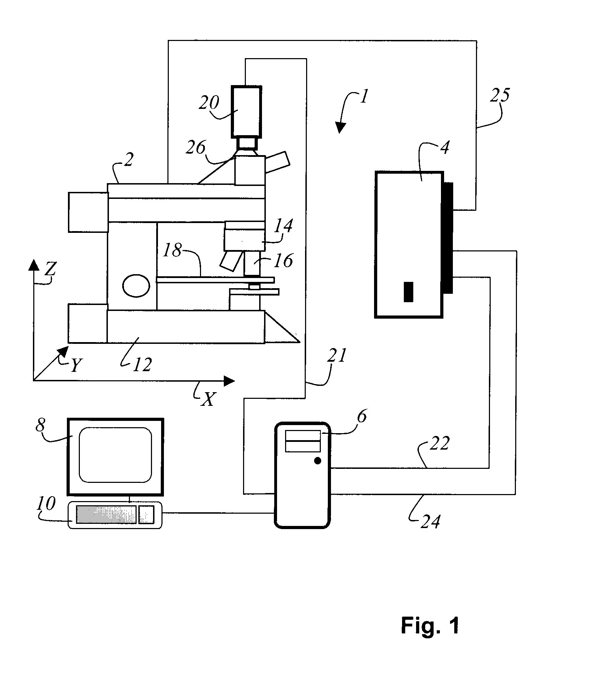

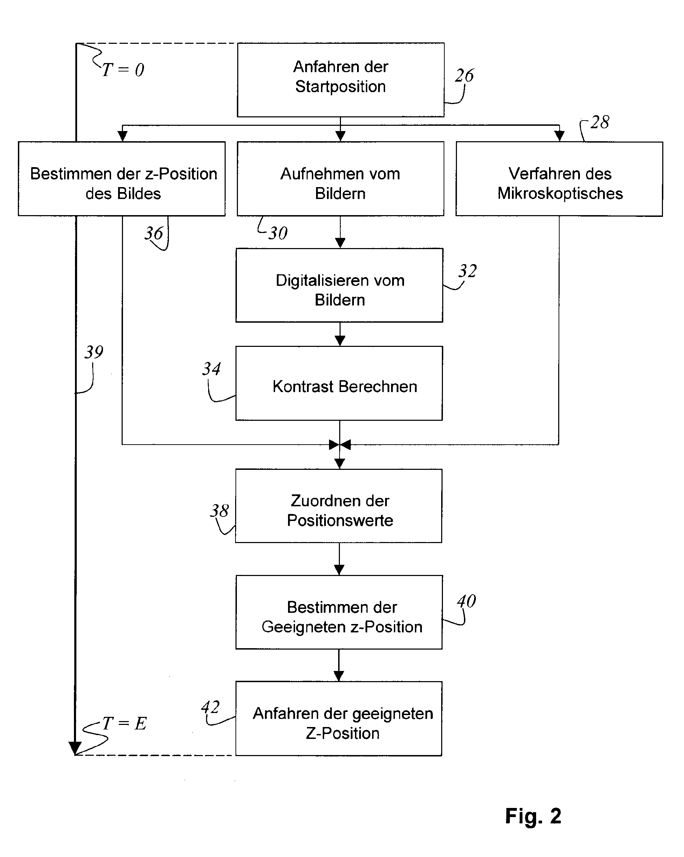

Fig. 1 zeigt eine schematische Darstellung eines Systems 1 zum Einstellen des Fokus für ein Mikroskop 2. Das System 1 umfasst das Mikroskop 2, eine Mikroskopkontrolleinrichtung 4, einen Computer 6, in dem ein Framegrabber (nicht dargestellt) installiert ist und ein Display 8 mit einer Tastatur 10. Das Mikroskop 2 besteht aus einem automatischen Mikroskop (z.B. Leica DM LA) mit der Mikroskopkontrolleinrichtung 4. Das Mikroskop 2 und die Mikroskopkontrolleinrichtung 4 kommunizieren über ein spezielles Steuerkabel 25. Auf den Aufbau des Mikroskops 2 wird im einzelnen nicht näher eingegangen. Es werden nur diejenigen Bauteile des Mikroskops 2 näher beschrieben, die für die Erfindung von wesentlicher Bedeutung sind. Das Mikroskop 2 besteht aus einem Stativ 12, am dem ein Objektivrevolver 14 angebracht ist. Der Objektivrevolver 14 trägt mindestens ein Objektiv 16. Das Objektiv 16 in seiner Arbeitsposition ist gegenüber einem Mikroskoptisch 18 vorgesehen. Der Mikroskoptisch 18 ist in x-Richtung X, y-Richtung Y und z-Richtung Z verfahrbar. Durch das Erzeugen einer Relativbewegung zwischen dem Mikroskoptisch 18 und dem Objektiv 16 in der Arbeitsposition kann die Fokuslage verändert bzw. angefahren werden. Zur Bestimmung der Fokuslage ist eine Videokamera 20 an dem Mikroskop 2 derart angebracht, dass mit der Videokamera 20 das Bild des durch das Objektiv 16 abgebildeten Objekts aufgenommen wird. Die Videokamera 20 ist über ein Videokabel 21 mit dem Computer 6 verbunden. Die von der Videokamera 20 aufgenommenen Signale werden im mittels des Framegrabbers im Computer 6 digitalisiert. Der Computer 6 ist über ein erstes serielles Kabel 22 mit der Mikroskopkontrolleinrichtung 4 verbunden. Ferner ist der Computer 6 über ein zweites serielles Kabel 24 mit der Mikroskopkontrolleinrichtung 4 verbunden. Die Mikroskopkontrolleinrichtung 4 dient zur Steuerung der automatischen Funktionen des Mikroskops 2, wie z.B. die z-Trieb-Bewegung (Verfahren in z-Richtung Z), Verfahren des Mikroskoptisches in x- und y-Richtung X und Y, Auswählen eines geeigneten Objektivs und vieles mehr. Der Computer 6 und die Mikroskopkontrolleinrichtung 4 kommunizieren über das erste serielle Kabel 22. Die Videokamera 20 ist auf einen Fototubus 26 des Mikroskops 2 angebracht. Das zweite serielle Kabel 24 überträgt Triggersignale vom Computer 6 zur Mikroskopkontrolleinrichtung 4. Diese Signale lösen Positionsbestimmungen beim z-Trieb aus. Dabei kann der z-Trieb entweder eine Verstellung des Mikroskoptisches 18 in z-Richtung oder eine Verstellung des Objektivs 16 in z-Richtung bewirken.
Für die folgende Beschreibung ist unter einer Verstellung der z-Position die Verstellung des Mikroskoptisches 18 in der z-Richtung Z zu verstehen. Wenn mit der Mikroskopkontrolleinrichtung 4 die Fokusfunktion gestartet wird, erfolgt zu Beginn der Fokusfunktion ein Anfahren der Startposition 26. Das Anfahren der Startposition 26 wird von der augenblicklichen Position $z_0$ aus zur Startposition $z_1 = z_0 - r/2$ durchgeführt. Dabei ist r der als Fokusfangbereich bezeichnete Suchbereich in z-Richtung Z. In der Regel ist der Fokusfangbereich ein Intervall um die ideale Fokuslage. Als nächstes erfolgt ein Verfahren 28 des z-Triebs (bzw. des Mikroskoptisches 18) des Mikroskops 2 mit konstanter Geschwindigkeit. Das Verfahren 28 durch den Fokusfangbereich wird solange durchgeführt, bis eine Endposition $z_2 = z_0 + r/2$ erreicht ist. Mittels der Videokamera 20 erfolgt das Aufnehmen von Bildern 30, das zeitlich parallel zu der Bewegung des z-Triebes durchgeführt wird. Dabei werden mit maximal möglicher Frequenz kontinuierlich Bilder aufgenommen (z.B. 25 Bilder/Sek.). Ein Digitalisieren 32 dieser Bilder wird von dem im Computer 6 befindlichen Framegrabber durchgeführt. In Fig. 2 ist ebenfalls eine Zeitskala 39 (beliebige Einheiten) aufgetragen. Hieraus wird deutlich, dass das eine Bestimmung 36 der augenblicklichen z-Position, das Verfahren 28 des z-Triebs des Mikroskops 2 und das Aufnehmen von Bildern 30 zeitlich parallel erfolgt. Ferner ist zu Bemerken, dass während der gesamten Zeit (von T = 0 bis T = E) bis zur Einstellung der geeigneten Fokuslage der Mikroskoptisch 18 nur minimal angehalten wird. Zwischen der Bewegung durch den Fangbereich (Bereich innerhalb dessen sich die optimale Fokuslage befindet) und der anschließenden Bewegung zur Fokusposition wird die rechnerische Bestimmung eben dieser Fokusposition ausgeführt (Interpolation). Eine zeitlich minimale Unterbrechung findet zwischen beiden Bewegungen statt.
Der Computer 6 bestimmt anhand der Bilddaten den Kontrastwert eines jeden Einzelbildes. Bei der Bestimmung des Kontrastwertes ist es nicht erforderlich, dass das gesamte Einzelbild herangezogen werden muss. In der Regel reicht es aus, dass man sich bei der Kontrastbestimmung auf einen zentralen Teilbereich des Einzelbildes beschränkt. Eine Kontrastberechnung 34 ist derart implementiert, dass sie für ein Bild zeitlich parallel zum Einzug des darauf folgenden Bildes ausgeführt wird. Die maximale Verfahrgeschwindigkeit des z-Triebes wird so gewählt, dass aus den Einzelbildern noch signifikante Kontrastwerte erhalten werden. Zeitlich mit den Bildaufnahmen synchronisierte Triggersignale werden vom Computer 6 über das zweite serielle Kabel 24 an die Mikroskopkontrolleinrichtung 4 gesendet.
Jedes Triggersignal löst in der Mikroskopkontrolleinrichtung 4 eine Bestimmung 36 der augenblicklichen z-Position aus. Alle zu einer Messung gehörenden z-Positionen werden in der Mikroskopkontrolleinrichtung 4 zwischengespeichert.
Nach der Fokusmessung wird eine interessierende Untermenge der Positionswerte von der Mikroskopkontrolleinrichtung 4 an den Computer 6 übertragen. Es erfolgt ein Zuordnen 38 der Positionswerte zu den jeweiligen Kontrastwerten. Die Kontrastwerte sind als Funktion der z-Positionen aufgetragen Ordinate aufgetragen. Aus ihnen erfolgt mittels eines geeigneten mathematischen Verfahrens eine Bestimmung 40 der geeigneten Fokusposition (bzw.

z-Position). Diese z-Position wird schließlich zur Scharfstellung des mikroskopischen Bildes angefahren. Das Anfahren erfolgt durch Betätigen des z-Triebs.

Findet sich innerhalb des Fokusfangbereiches kein signifikant scharfes Bild, so wird der oben beschriebene Prozess mit einem örtlich verschobenen oder vergrößerten Fangbereich ggf. mehrfach wiederholt.

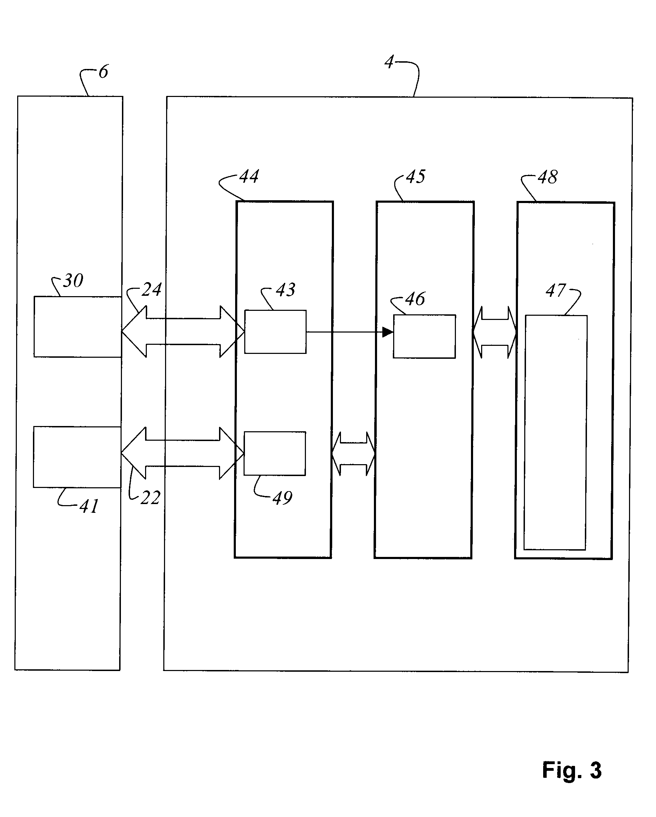

In Fig. 3 ist das Zusammenwirken des Computers 6 mit der Mikroskopkontrolleinrichtung 4 dargestellt. Bei der Fokusmessung wird nach Abschluss eines jeden Bildeinzugs ein Triggersignal vom Computer 6 erzeugt, welches auf Seiten der Mikroskopkontrolleinrichtung 4 eine sofortige Bestimmung der Augenblicksposition des z-Triebes (bzw. der Position des Mikroskoptisches 18) auslöst. Das Triggersignal erscheint als Signalflankenwechsel auf einer Handshake-Leitung des zweiten seriellen Kabels 24 zwischen dem Computer 6 und der Mikroskopkontrolleinrichtung 4, und wird von der Mikroskopkontrolleinrichtung 4 auf einem Modem-Status-Eingang 43 (z.B. CTS Clear-To-Send) eines seriellen Schnittstellen-ICs UART 44 (Universal Asynchronous Receiver/Transmitter) registriert. Der UART 44 reagiert auf das Signal mit der Auslösung eines externen Interrupts 46 bei einem Mikrokontroller 45 in der Mikroskopkontrolleinrichtung 4, der für Steuerung des z-Triebes zuständig ist. Die daraufhin aufgerufene Interrupt-Serviceroutine stellt die Augenblicksposition des z-Triebes fest und schreibt den Wert in ein Datenfeld 47, das in einer in der Mikroskopkontrolleinrichtung 4 vorgesehenen Speichereinheit 48 realisiert ist. Die Augenblicksposition wird in einer z-Positionstabelle in der Speichereinheit 48 abgelegt. Der Tabellenindex wird nach jedem Schreibvorgang um eins erhöht. Dieser Vorgang wiederholt sich für alle Bildeinzüge einer Fokusmessung. Nach Abschluss der Messung wird ein Teil der Positionsdaten vom Computer 6 über das erste serielles Kabel 22 abgerufen und zur Bestimmung der Fokusposition herangezogen. Das erste serielle Kabel 22 ist mit einer seriellen Schnittstelle 41 des Computers 6 verbunden. Der Schnittstellen-IC UART 44 besitzt eine weitere serielle Schnittstelle 49, über die das erste serielle Kabel 22 den Computer 6 mit der Mikroskopkontrolleinrichtung 4 verbindet.

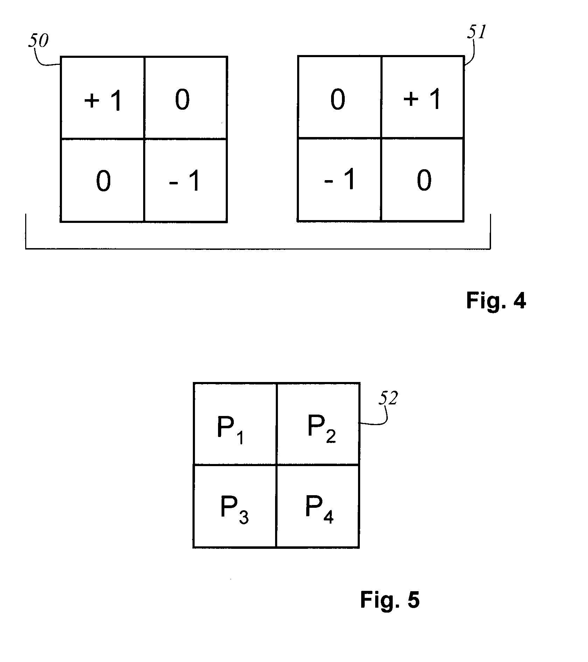

Die Bestimmung des Kontrastwertes eines jeden eingezogenen Bildes läuft nach geeigneten mathematischen Verfahren. In einem ersten Schritt wird eine Transformation des Graubildes vorteilhaft mit dem Roberts-Cross-Operator durchgeführt (siehe Fig. 4).

Die Roberts-Cross-Bildtransformation erzeugt mit geringem Rechenaufwand aus einem Graubild ein sog. Gradientenbild. Darin erscheinen Bildregionen mit ursprünglich hohem Kontrast hell und jene, die auf homogene Bildbereiche zurückgehen, dunkel. Die Grauwerte der Bildpunkte sind die Beträge der Gradienten an den Bildpunktorten des Ursprungsbildes.

Der Roberts-Cross-Operator besteht aus einem ersten 2x2 Filterkern 50 und einem zweiten 2x2 Filterkern 51. Der zweite 2x2 Filterkern 51 ist gegenüber dem ersten 2x2 Filterkern 50 um 90° gedreht. Die Drehung um 90° ist einfach aus dem Vergleich des ersten 2x2 Filterkerns 50 mit dem zweiten 2x2 Filterkern 51 ersichtlich. Der Werte in der den Feldern des ersten Filterkerns 50 sind im zweiten 2x2 Filterkern 51um jeweils ein Feld im Uhrzeigersinn verschoben. Der erste 2x2 Filterkern 50 wird mit $G_x$ und der zweite 2x2

Filterkern 51 wird mit $G_y$ bezeichnet.

Der Gradientenwert eines Bildpunktes ist dann durch Gleichung 1 gegeben.

$$|G| = \sqrt{G_x^2 + G_y^2} \qquad\qquad \text{Gleichung 1}$$

Einfacher zu berechnen ist ein angenäherter Gradientenwert, der gemäß Gleichung 2 bestimmt wird.

$$|G|=|G_x|+|G_y| \qquad\qquad \text{Gleichung 2}$$

Dieser Wert kann in einem Schritt mit einem Pseudo-Operator 52 (siehe Fig. 5) bestimmt werden.

Mit dem Pseudo-Operator 52 berechnet sich der Gradient gemäß Gleichung 3 zu.

$$|G|=|P_1 -P_4|+|P_2-P_3| \qquad\qquad \text{Gleichung 3}$$

Der Vorteil dieses Pseudo-Operators 52 ist, dass er eine geringe Rechenzeit in Anspruch nimmt. Die Bildtransformation kann so von einem Computer mit derzeitigem Leistungsvermögen in einem Bruchteil der Videozykluszeit (Zeit für die Aufnahme eines Bildes) ausgeführt werden.

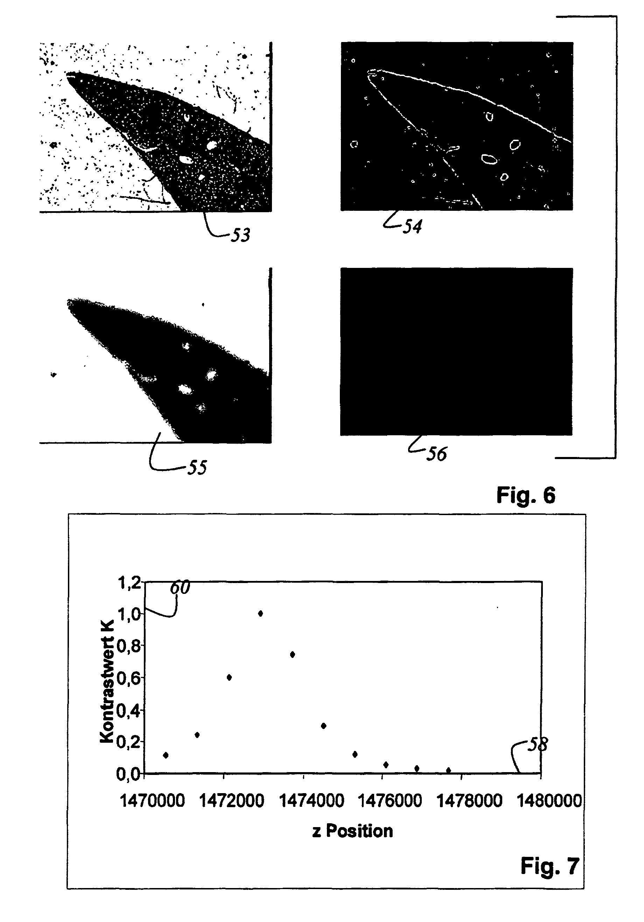

Fig. 6 zeigt die Ergebnisse der mit dem Pseudo-Operator 52 durchgeführten Bildtransformation. Bei der Transformation eines scharfen Bildes 53 zeichnen sich im Gradientenbild 54 deutlich die Konturen des Objekts im scharfen Bild 53 ab. Bei der Transformation eines unscharfen Bildes 55 sind im Gradientenbild 56 des unscharfen Bildes 55 keinerlei Konturen zu erkennen. Der Kontrastwert des unscharfen Bildes 55 ist daher deutlich geringer als der Kontrastwert des scharfen Bildes 53.

Aus jedem Gradientenbild wird eine Kennzahl $K$ gewonnen, die den Kontrast des Bildes quantifiziert, also den Kontrastwert eines jeden Bildes repräsentiert. Zur Ermittlung des Kontrastwertes K wird die Grauwert-Häufigkeitsverteilung eines jeden Gradientenbildes bestimmt und in einem Datenfeld $H[1, 2,...,N]$ gespeichert. Der Bildkontrast K wird z.B. bei jedem Graubild mit 8 Bit Grauwert-Auflösung bestimmt mit:

$$K = \frac{1}{N} \sum_{i=i_0}^{255} H[i] * i \qquad \qquad \text{Gleichung 4}$$

Das Produkt $H[i]*i$ bewirkt eine stärkere Gewichtung der höheren Grauwerte des Gradientenbildes, deren Auftreten mit zunehmender Bildschärfe ansteigt. $H(i<i_0)$ (z.B. $i_0$ = 2) umfasst alle Bildpunkte ohne Gradient bzw. mit rauschbedingtem geringen Gradient, weshalb diese Punkte nicht in die Kontrastbestimmung einbezogen werden. Das Niveau von $i_0$ kann an die Eigenschaften des Objekts angepasst werden, auf das scharf gestellt werden soll. K wird normiert durch Division mit N als der Gesamtanzahl der betrachteten bzw. zur Fokusbestimmung herangezogenen Bildpunkte.

Fig. 7 zeigt die (normierte) Fokusfunktion $K = f(z)$, welche bei der Fokusmessung der mikroskopischen Szene aus Fig. 6 (Objektiv-Vergrößerung: 10x) erhalten wurde. Zur Verringerung der Rechenzeit wurden nur ein 200x200 Bildpunkte umfassender Bereich im Zentrum des Vollbildes (768x576 Bildpunkte) zur Kontrastbestimmung herangezogen. Alle Kontrastwerte $K$ sind dabei mit dem Maximalwert der Fokusfunktion normiert. Auf der Abszisse 58 ist die z-Position in systemspezifischen Einheiten (1000 Einheiten entsprechen 15 µm) aufgetragen. Auf der Ordinate 60 ist der normierte Kontrastwert K aufgetragen. Jeder der Punkte in Fig. 7 steht für einen Kontrastwert K eines aufgenommenen Bildes. Aus der Vielzahl der Punkte kann man eine eindeutige Ausbildung eine Maximums erkennen.

Nimmt man einen stetigen Verlauf der realen Fokusfunktion an, so lässt sich diese anhand der ermittelten diskreten Wertepaare in Fig. 7 mittels einer polynomialen Interpolation beschreiben. Das interpolierende Polynom N - 1ten Grades, das durch die N Punkte $y_1 = f(x_1)$, $y_2 = f(x_2)$ ... $y_N = f(x_N)$ geht, ergibt sich aus der LAGRANGEschen Formel (siehe Gleichung 5).

$$P = \frac{(x - x_2)(x - x_3)...(x - x_N)}{(x_1 - x_2)(x_1 - x_3)...(x_1 - x_N)}y_1 + \frac{(x - x_1)(x - x_3)...(x - x_N)}{(x_2 - x_1)(x_2 - x_3)...(x_2 - x_N)}y_2 + ... +$$

$$\frac{(x - x_1)(x - x_2)...(x - x_{N-1})}{(x_N - x_1)(x_N - x_2)...(x_N - x_{N-1})} y_N \qquad \qquad \text{Gleichung 5}$$

Setzt man die Wertepaare der gemessenen Fokusfunktion (siehe Fig. 7) als "Punkte" in Gleichung 5 ein, so erhält man das Polynom einer stetigen Fokusfunktion. Der Wert $x_{max}$, bei dem $P(x_{max})$ im Intervall des Fokusfangbereichs maximal wird, ist als "ideale" Fokusposition anzusehen. Die Praxis zeigt, dass an dieser Position zumeist ein schärferes Bild erhalten wird als an jener Position, bei der die gemessene, diskrete Fokusfunktion den maximalen Kontrastwert besitzt.

Die rechnerische Bestimmung der interpolierten Fokusposition geschieht mit der Rechenroutine, wie sie in William H. Press (Editor), et al: NUMERICAL RECIPES IN C: THE ART OF SCIENTIFIC COMPUTING, Copyright (C) 1988-1992 by Cambridge University Press. Chapter 3.1, P.108, beschrieben ist. Die Routine liefert bei Vorgabe der Koordinaten von diskreten Funktionspunkten und eines beliebigen x-Wertes den zugehörigen y-Wert der interpolierten Funktion. Der x-Wert steht dabei für die z-Position des Mikroskoptisches 18 und der zum x-Wert ermittelte y-Wert ist der Kontrastwert.

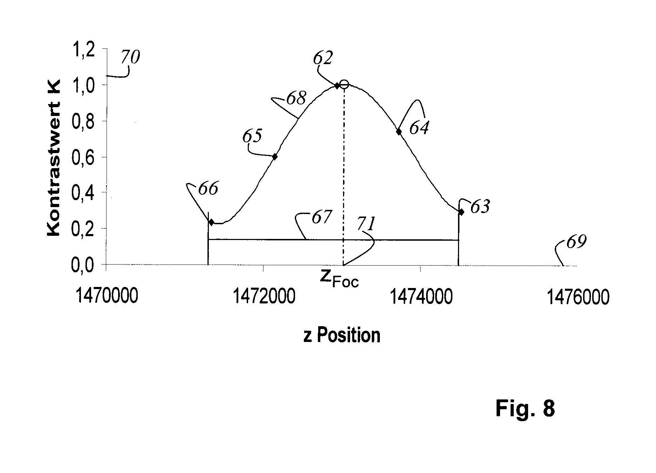

Wie in Fig. 8 dargestellt, wird für die Suche nach der interpolierten Fokusposition die Anzahl der betrachteten Punkte auf fünf beschränkt; und zwar auf einen Punkt 62 des diskreten Funktionsmaximums und deren zwei rechte und linke Nachbarpunkte 63 , 64 und 65, 66. Die beiden äußeren Nachbarpunkte 63 und 66 bilden die Grenzen eines Intervalls 67, innerhalb dessen durch mehrfache Aufrufe der Rechenroutine mit wachsenden x-Werten (hier: z-Position des Mikroskoptisches) das Funktionsmaximum ermittelt wird. Der Zuwachs der vorgegebenen x-Werte wird dabei deutlich kleiner als der Abstand zweier benachbarter Messpunkte gewählt. Die so gefundene Fokusposition $z_{Foc}$ 71 im beschriebenen Intervall einer kontinuierlichen Funktion 68 steht für die optimale Fokusposition. Auf der Abszisse 69 ist die Position des z-Antriebs aufgetragen und auf der Ordinate 70 der Kontrastwert. An Hand des gefundenen Maximums des Kontrastwerts lässt sich aus der kontinuierlichen Kurve die zum maximalen Kontrastwert gehörige z-Position ermitteln. Der z-Trieb des Mikroskops wird in entsprechender Weise betätigt, dass er in die z-Position mit dem maximalen Kontrastwert verfahren wird.

**EP 1 361 468 A2**

**Patentansprüche**

1. Autofokusverfahren für ein Mikroskop (2) wobei das Mikroskop (2) derart ausgestaltet ist, dass zwischen einem Mikroskoptisch (18) und einem in einer Arbeitsposition befindlichen Objektiv eine Relativbewegung in z-Richtung erzielbar ist, **gekennzeichnet durch** die folgenden Schritte:

   a) Aufnehmen eines Bildes mit einer Kamera (20) während des kontinuierlichen Durchführens der Relativbewegung zwischen dem Mikroskoptisch (18) und dem Objektiv (16) in z-Richtung; wobei die Relativbewegung zwischen einer Startposition und einer Endposition durchgeführt wird;

   b) Bestimmen der **durch** die Relativbewegung erreichten z-Position, an der das Bild aus der Kamera ausgelesen wurde;

   c) Berechnen eines Kontrastwerts für das ausgelesene Bild;

   d) Speichern der **durch** die Relativbewegung erreichten z-Position und des zugehörigen Kontrastwerts;

   e) Durchführen der Schritte a) bis d) bis **durch** die Relativbewegung in z-Richtung bis die vorgegebene Endposition erreicht ist;

   f) Ermitteln einer kontinuierlichen Kontrastwertfunktion aus den verschiedenen z-Positionen und dem zu der jeweiligen z-Position gehörigen Kontrastwert;

   g) Berechnen aus der kontinuierlichen Kontrastwertfunktion eines maximalen Kontrastwertes und der dazugehörigen z-Position; und

   h) Anfahren der z-Position, die dem maximalen Kontrastwert zugeordnet ist.

2. Autofokusverfahren nach Anspruch 1, **dadurch gekennzeichnet, dass** vor dem kontinuierlichen Verfahren des Mikroskoptisches (18) in z-Richtung und dem Aufnehmen von mehreren Bildern mit der Kamera (20) eine Startposition mit dem Mikroskoptisch (18) angefahren wird.

3. Autofokusverfahren nach Anspruch 1, **dadurch gekennzeichnet, dass** vor dem kontinuierlichen Verfahren des Objektivs (16) in z-Richtung und dem Aufnehmen von mehreren Bildern mit der Kamera (20) eine Startposition mit dem Objektiv (16) angefahren wird.

4. Autofokusverfahren nach einem der Ansprüche 1 bis 3, **dadurch gekennzeichnet, dass** während der kontinuierlichen Relativbewegung zwischen dem Mikroskoptisch (18) und dem Objektiv (16) und nach Abschluss eines jeden Bildeinzugs ein Triggersignal vom einem Computer (6) erzeugt wird, welches an einer Mikroskopkontrolleinrichtung (4) eine sofortige Bestimmung der Augenblicksposition des die Relativbewegung erzeugenden des z-Triebes auslöst.

5. Autofokusverfahren nach Anspruch 1, **dadurch gekennzeichnet, dass** vor dem kontinuierlichen Verfahren des Mikroskoptisches (18) eine Startposition $z_1$ angefahren wird, wobei die Startposition $z_1$ sich aus einer augenblicklichen Position $z_0$ des Mikroskoptisches (18) gemäß der Gleichung $z_1 = z_0 - r/2$ errechnet und r einen Suchbereich um die augenblickliche Position $z_0$ bezeichnet.

6. Autofokusverfahren nach Anspruch 1, **dadurch gekennzeichnet, dass** vor dem kontinuierlichen Verfahren des Objektivs (16) eine Startposition $z_1$ angefahren wird, wobei die Startposition $z_1$ sich aus einer augenblicklichen Position $z_0$ des Objektivs (16) gemäß der Gleichung $z_1 = z_0 - r/2$ errechnet und r einen Suchbereich um die augenblickliche Position $z_0$ bezeichnet.

7. System zum Einstellen des Fokus für ein Mikroskop (2) mit einem in einer Arbeitsposition angeordneten Objektiv (16) und einem Mikroskoptisch (18), wobei zwischen dem Objektiv und dem Mikroskoptisch eine Relativbewegung in z-Richtung erzeugbar ist, einer Kamera (20), die mit dem Mikroskop verbunden ist, um Bilder eines Objekts aufzunehmen, einer Mikroskopkontrolleinrichtung (4) und einem Computer (6), der über mindestens eine Verbindung mit der Mikroskopkontrolleinrichtung (4) verbunden ist, **dadurch gekennzeichnet, dass** Mittel zum Erzeugen eines Triggersignals im Computer (6) vorgesehen sind, wobei das Triggersignal nach Abschluss eines jeden Bild-

6

einzuges durch die Kamera (20) die Bestimmung der momentanen z-Position der kontinuierlichen Relativbewegung initiiert und dass eine Speichereinheit (48) vorgesehen ist, die jeweils einen eingezogenen Kontrastwert zusammen mit der zugehörigen z-Position speichert.

8. System nach Anspruch 7, **dadurch gekennzeichnet, dass** der Computer (6) und die Mikroskopkontrolleinrichtung (4) über ein erstes serielles Kabel (22) und ein zweites serielles Kabel (24) miteinander verbunden sind, und dass der Computer (6) und die Mikroskopkontrolleinrichtung (4) über das erste serielle Kabel (22) kommunizieren, und dass der Computer (6) über das zweite serielle Kabel (24) an die Mikroskopkontrolleinrichtung (4) die Triggersignale überträgt.

9. System nach Anspruch 8, **dadurch gekennzeichnet, dass** das Triggersignal als Signalflankenwechsel auf einer Handshake-Leitung des zweiten seriellen Kabels (24) erscheint.

10. System nach einem der Ansprüche 7 bis 9, **dadurch gekennzeichnet, dass** die augenblickliche durch die Relativbewegung erreichte z-Position von der Mikroskopkontrolleinrichtung 4 auf einem Modem-Status-Eingang 43 eines seriellen Schnittstellen-ICs UART 44 registrierbar ist.

11. System nach Anspruch 10, **dadurch gekennzeichnet, dass** der UART 44 einen externen Interrupt 46 bei einem Mikrokontroller 45 in der Mikroskopkontrolleinrichtung 4 auslöst, wobei der Mikrokontroller 45 für die Steuerung des z-Triebes zuständig ist.

12. System nach Anspruch 11, **dadurch gekennzeichnet, dass** die Augenblicksposition des z-Triebes in ein Datenfeld 47 speicherbar ist, das in einer in der Mikroskopkontrolleinrichtung 4 vorgesehenen Speichereinheit 48 realisiert ist.

**Fig. 1**

T = 0

| Anfahren der Startposition | 26 |

| Bestimmen der z-Position des Bildes | Aufnehmen vom Bildern | Verfahren des Mikroskoptisches | 28 |

36

30

| Digitalisieren vom Bildern | 32 |

34 | Kontrast Berechnen |

39

38 | Zuordnen der Positionswerte |

| Bestimmen der Geeigneten z-Position | 40 |

T = E

42 | Anfahren der geeigneten Z-Position |

**Fig. 2**

**Fig. 3**

*50*

| +1 | 0 |
|----|---|
| 0 | -1 |

*51*

| 0 | +1 |
|----|----|
| -1 | 0 |

**Fig. 4**

*52*

| $P_1$ | $P_2$ |
|-------|-------|
| $P_3$ | $P_4$ |

**Fig. 5**

53

54

55

56

**Fig. 6**

60

Kontrastwert K

1,2

1,0

0,8

0,6

0,4

0,2

0,0

1470000  1472000  1474000  1476000  1478000  1480000

**z Position**

58

**Fig. 7**

Fig. 8